# EUROPEAN PATENT SPECIFICATION

(11) **EP 0 580 223 B1**
(45) Date of publication and mention of the grant of the patent: **05.06.2002**
(21) Application number: 93202066.2
(22) Date of filing: 13.07.1993
(51) Int. Cl.: H01M 2/10, H01M 2/02

(54) **Vehicle battery**
Fahrzeug-batterie
Batterie pour véhicule

(30) Priority: 22.07.1992 GB 9215524
(43) Date of publication of application: 26.01.1994
(73) Proprietor: Delphi Technologies, Inc., Troy, MI 48007 (US)
(72) Inventor: Weis, Albert Etienne, L-2210 Luxembourg (LU)
(74) Representative: Denton, Michael John

(56) References cited:
- DE-A- 3 009 467
- DE-U- 1 886 565
- DE-U- 8 521 248
- FR-A- 778 646
- GB-A- 2 250 375
- US-A- 2 151 654
- US-A- 5 202 200
- PATENT ABSTRACTS OF JAPAN vol. 5, no. 82 (E-59)(754) 29 May 1981 & JP-A-56 030 248 (MIYAGAWA KASEI KOGYO K.K.)

## Description

The present invention relates to a vehicle battery, and to a method of forming a vehicle battery.

In many applications, vehicle batteries are kept at moderate ambient temperatures and function satisfactorily with a relatively thin battery case. However, in some applications, vehicle batteries are subject to high ambient temperatures, caused for example by heat emitted from the vehicle engine. In this latter case, the effectiveness and life of the battery can be adversely affected, so some form of shielding from the heat is usually provided.

A variety of heat shields have been used, including one shield formed of a plurality of layers of material enclosing an air gap, and another shield consisting of flexible foam.

A problem with these types of heat shield is that they make the battery difficult to handle when they are fitted onto the battery case. The only effective way of avoiding this problem has been to place the heat shield on the battery case after the battery case has been fitted in a vehicle, which increases assembly costs. Furthermore, care has to be taken not to damage the heat shield before it is fitted to the battery case.

It has also been proposed to have a combined battery case and heat shield, in which the walls of the battery case are formed, for example, from a thick layer of heat-insulating material. Although this may avoid the problem of the two above-mentioned alternatives, such a battery would be more difficult to manufacture than a conventional battery. In particular, the preparation of the positive and negative battery plates may be carried out within the battery case in which they are to be fitted. However, since this preparation involves substantial heat generation, a battery with a combined battery case and heat shield would significantly hinder the preparation of the plates. Thus, if the preparation time is not to be lengthened, either the plates would have to be prepared in another location or expensive control equipment, such as temperature control equipment, would have to be provided.

The present invention seeks to provide an improved vehicle battery and a method of fitting a heat shield to a battery case.

According to an aspect of the present invention, there is provided a vehicle battery as specified in claim 1.

With a tight fitting heat shield, it is possible to provide a heat-shielded vehicle battery which can be handled as a single unit. Furthermore, the provision of a separate heat shield enables battery elements such as the positive and negative plates to be prepared in the battery case in conventional manner.

Advantageously, at least one internal surface of the heat shield is substantially a mirror image of a corresponding outer surface of the battery case. During the manufacture of a vehicle battery and its installation in a vehicle, the battery must be handled a number of times by machinery, for which appropriate gripping means, such as protrusions on the outer surfaces of the battery case, are provided. Thus, by making the internal surfaces of the heat shield substantially a mirror image of the outer surfaces of the battery case, it is possible to ensure that the heat shield fits tightly over substantially the whole of the battery case.

Preferably, the heat shield is substantially rigid. With such a construction, the heat shield can add considerable strength to the battery, making it more easily managed by, for example, robots on an assembly line. Such rigidity is particularly useful in respect of the end walls of the heat shield, since the end walls of the battery case are generally much weaker than its side walls, which are supported by the positive and negative battery plates and by separating walls within the battery case.

The heat shield may be made of a unitary layer of material. Preferably, the heat shield is made of polypropylene. It has been found that this material is particularly suitable for such an application since it can be moulded with ease and can be made relatively rigid.

In an embodiment, the battery case and the battery heat shield are made of substantially the same material. This feature can significantly facilitate recycling of the battery, since the battery case and heat shield are recyclable together.

Advantageously, each wall of the heat shield has a thickness of substantially 6 millimetres or more. It has been found that a heat shield with such a minimum thickness can provide a sufficiently strong battery for manipulation by, for example, robots.

According to another aspect of the present invention, there is provided a method of forming a vehicle battery as specified in claim 7.

An embodiment of the present invention is described below, by way of illustration only, with reference to the accompanying drawings, in which:
Figure 1 is a perspective view of a battery case;
Figure 2 is an end elevational view, in partial cross-section, of an embodiment of battery including the battery case of Figure 1; and
Figure 3 is a side elevational view, in partial cross-section, of the battery of Figure 2.

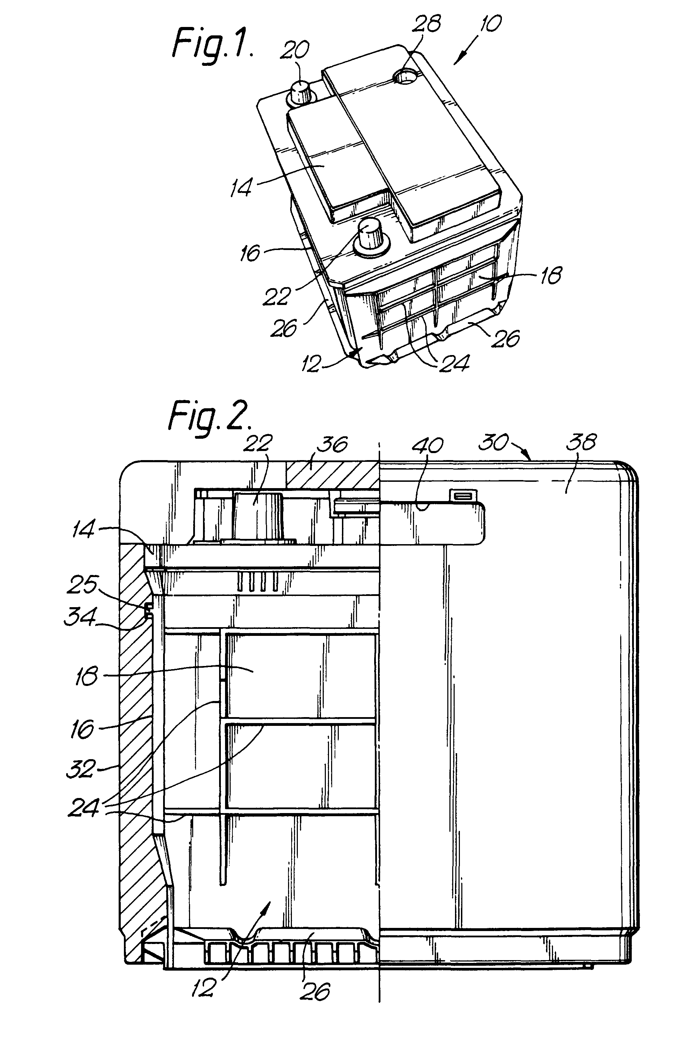

Referring to Figure 1, there is shown a battery 10 without its heat shield. The battery includes a battery case 12 to which is fitted a lid 14.

In the arrangement shown, the battery case 12 and lid 14 have the general form of a conventional thin walled battery. This form is retained in this embodiment so as to provide two different types of battery from the same basic components (one with a heat shield and one without a heat shield). The term battery, as used in this description, is intended to denote a battery with a heat shield.

Positive and negative battery terminals 20,22 protrude out of the lid 14 for connecting the battery 10 electrically to the conventional vehicle loads and to the vehicle alternator.

As can be seen, the battery case 12 and lid 14 form a substantially rectangular cuboid, in which two side walls 16 of the battery case 12 extend along a longitudinal axis of the battery 10 and two end walls 18 extend along a transverse axis of the battery.

The interior of the battery case 12 includes a plurality of separating walls which extend along the transverse axis of the battery 10 and are connected to the side walls 16.

Within the battery 10 there is provided a plurality of positive and negative battery plates, normally made of lead, which are arranged in pairs such that one positive plate and one negative plate are located between each pair of separating walls. The positive and the negative plates lie along the transverse axis of the battery 10 and extend to abut the interior surfaces of the side walls 16. Each of the positive plates is connected to the positive terminal 20, while each of the negative plates is connected to the negative terminal 22. A suitable battery fluid, such as a weak acid, substantially fills the interior of the battery case 12.

A plurality of ribs 24 is provided on the outer surface of the battery case 12, which are principally used in handling the battery case 12 during its manufacture and which can also provide added strength to the battery case walls. This latter feature can be particularly useful in respect of the end walls 18, which do not benefit from the strengthening effect of the separating walls and positive and negative battery plates.

Close to the base of the battery case 12, a plurality of flanges 26 extend outwardly of the battery case 12 for use in securing the battery case 12 in a vehicle.

As is conventional, the battery 10 also includes a battery charge indicator 28 in the lid 14.

The battery case 12 and lid 14 in this embodiment are formed of polypropylene.

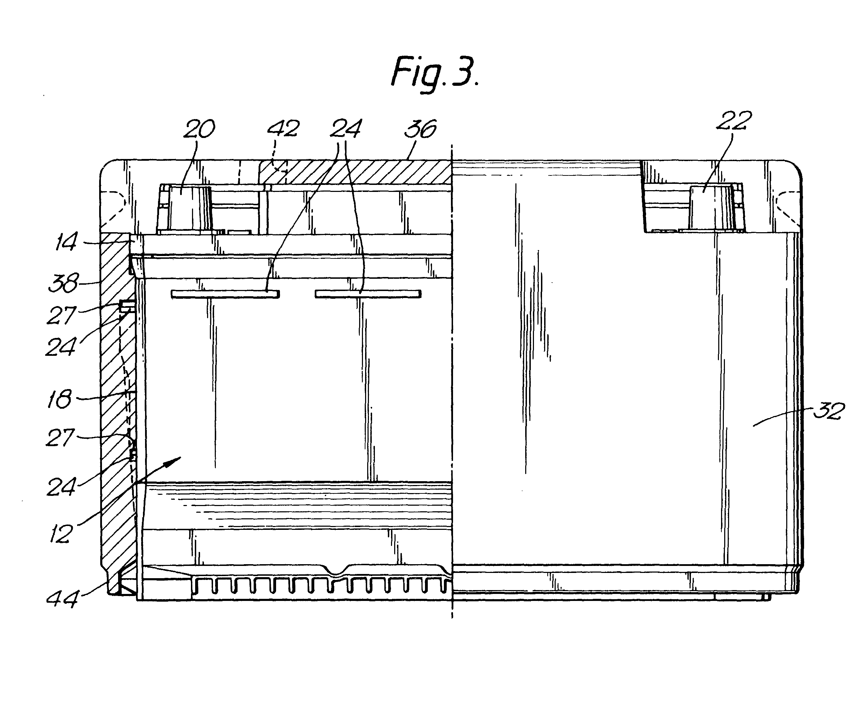

Referring to Figures 2 and 3, a heat shield 30, of substantially rigid expanded polypropylene, fits tightly over the battery case 12 and the lid 14.

The walls of the heat shield 30 form a substantially rectangular cuboid and may cover the battery case 12 and lid 14 substantially completely, in which case the heat shield 30 may include fixing means, such as flanges similar to the flanges 26, for fixing the battery to a vehicle. Alternatively, the heat shield 30 may be open at its lower extent such that the base of the battery case 12 can extend beyond the heat shield 30 to allow the battery to be fixed to a vehicle by the flanges 26 in conventional manner.

Each wall of the heat shield 30 is of unitary construction and has a minimum thickness of at least 6 millimetres. However, this minimum thickness may vary in dependence upon the thickness of the walls of the battery case 12 and lid 14, the density of the material forming the walls of the heat shield 30, and the size of the battery 10. The minimum thickness is preferably chosen so as to provide adequate heat shielding and adequate support to enable the battery 10 to be handled by, for example, a robot, and in particular to be handled by its end walls.

The inner surface of each wall of the heat shield 30 is substantially a mirror image of the corresponding wall of the battery case 12 or lid 14. This can be seen particularly clearly in Figure 2, in which the side wall 32 of the heat shield 30 is a close fit to the side wall 16 of the battery case 12.

In the region of the rib 25, the wall 32 has a recess 34 significantly wider than the thickness of the rib 25 to allow for manufacturing tolerances. The other recesses in the interior surfaces of the walls of the heat shield 30, as with the recesses 27 in the end wall 38 shown in Figure 3, are also designed to allow for such manufacturing tolerances.

At their lower extents 44, the outer surfaces of the walls 32,38 of the heat shield 30 may be contoured, although this is not necessary.

It is not essential for the inner surface of the top wall 36 of the heat shield 30 to match the top surface of the battery lid 14 as this wall 36 is not as important to the overall fit of the heat shield 30 as are its side and end walls 32,38. Furthermore, the fitting of the heat shield 30 can be considerably facilitated if the inner surface of the top wall 36 is substantially flat, as will become apparent below.

The heat shield 30 is open at its corners adjacent the electrical terminals 20,22 to enable clamps to be fitted on these terminals. An aperture 42 (Figure 3) is also provided in the top wall 36 of the heat shield 30 to permit viewing of the battery charge indicator 28.

The end wall 38 of the heat shield 30 is provided with an elongate recess or opening 40 to facilitate carrying of the battery 10, although this is not essential.

The battery is manufactured in any suitable manner.

There are two preferred methods of fitting the heat shield 30 over the battery case 12 and lid 14. The first involves heating the heat shield 30 to a sufficient temperature to cause the shield to expand and become relatively soft. The heat shield 30 is then slipped over the battery case 12 and lid 14.

After fitting, the heat shield is allowed to cool so as to shrink and harden, thereby forming a tight fitting rigid shield.

If desired, a heat-shielding base portion may also be provided.

Another method is to produce the heat shield 30 in two halves, which are then joined together, for example by mirror welding, at a longitudinally or transversally extending seam. Although by this method an additional assembly step is required, namely that of joining the two halves of the heat shield together, it is not necessary to heat the shield before fitting it over the battery case and lid, which can be a time consuming process. With this method, it may be advantageous to make the inner surface of the top wall 36 of the heat shield 30 substantially flat to facilitate the fitting of the two halves of the shield over the battery case 12 and lid 14.

Another possible method involves fitting the heat shield 30 over the battery case 12 and lid 14 just after the heat shield 30 has been moulded, when the heat shield is still at a high temperature and is still flexible.

The tight fit of the heat shield 30 on the battery case 12 enables the battery 10 to be easily handled as a single unit and can also provide sufficient strength for the battery to be handled, for example by a robot.

## Claims

1. A vehicle battery comprising a battery case (12) for holding battery fluid, positive and negative plates and positive and negative battery terminals (20,22); and a heat shield (30), formed in one piece, or formed from two pieces joined together, secured to the battery case in a substantially tight fit, such that the battery case and the heat shield are a substantially unitary rigid structure.

2. A vehicle battery according to Claim 1, wherein the heat shield (30) is substantially rigid.

3. A vehicle battery according to Claim 1 or Claim 2, wherein each wall (32) of the heat shield (30) has a thickness of substantially 6 millimetres or more.

4. A vehicle battery according to any preceding claim, wherein the heat shield (30) is made of polypropylene.

5. A vehicle battery according to any preceding claim, wherein the battery case (12) and the heat shield (30) are made of substantially the same material.

6. A vehicle battery according to any preceding claim, wherein the heat shield (30) is adapted to surround the battery case (12) substantially completely.

7. A method of forming a vehicle battery as claimed in any one of the preceding claims comprising assembling a battery with the battery case (12); forming the heat shield (30) in one piece or in two pieces; and securing the heat shield to the battery case in a substantially tight fit, such that the battery case and the heat shield form a substantially unitary rigid structure.

8. A method as claimed in Claim 7, in which the heat shield (30) is formed in one-piece, wherein the securing step comprises heating the heat shield to cause expansion thereof; positioning the heat shield around the battery case (12); and cooling the heat shield to cause contraction thereof such that the heat shield grips the battery case.

9. A method as claimed in Claim 7, in which the heat shield (30) is formed in one-piece, wherein the heat shield is formed by moulding, and wherein the moulded heat shield is positioned around the battery case (12) before cooling of the moulded heat shield, and the heat shield is then cooled to cause contraction thereof such that the heat shield grips the battery case.

10. A method as claimed in Claim 7, in which the heat shield (30) is formed in two-pieces, wherein the securing step comprises welding the two pieces of the heat shield together.

## Patentansprüche

1. Fahrzeugbatterie mit einem Batteriegehäuse (12) zum Halten von Batteriefluid, positiven und negativen Platten und positiven und negativen Batterieanschlüssen (20, 22); und einer Wärmeabschirmung (30), die einstückig oder aus zwei miteinander verbundenen Stücken gebildet und an dem Batteriegehäuse im Wesentlichen fest sitzend befestigt ist, so dass das Batteriegehäuse und die Wärmeabschirmung eine im Wesentlichen einheitliche starre Anordnung bilden.

2. Fahrzeugbatterie nach Anspruch 1, wobei die Wärmeabschirmung (30) im Wesentlichen starr ist.

3. Fahrzeugbatterie nach Anspruch 1 oder 2, wobei jede Wand (32) der Wärmeabschirmung (30) eine Dicke von im Wesentlichen 6 mm oder mehr aufweist.

4. Fahrzeugbatterie nach einem der vorhergehenden Ansprüche, wobei die Wärmeabschirmung (30) aus Polypropylen besteht.

5. Fahrzeugbatterie nach einem der vorhergehenden Ansprüche, wobei das Batteriegehäuse (12) und die Wärmeabschirmung (30) aus im Wesentlichen demselben Material bestehen.

6. Fahrzeugbatterie nach einem der vorhergehenden Ansprüche, wobei die Wärmeabschirmung (30) so ausgebildet ist, um das Batteriegehäuse (12) im Wesentlichen vollständig zu umgeben.

7. Verfahren zur Herstellung einer Fahrzeugbatterie nach einem der vorhergehenden Ansprüche, umfassend, dass:
eine Batterie mit dem Batteriegehäuse (12) zusammengebaut wird;
die Wärmeabschirmung (30) in einem Stück oder zwei Stücken ausgebildet wird; und die Wärmeabschirmung an dem Batteriegehäuse im Wesentlichen fest sitzend befestigt wird, so dass das Batteriegehäuse und die Wärmeabschirmung eine im Wesentlichen einheitliche starre Struktur bilden.

8. Verfahren nach Anspruch 7, wobei die Wärmeabschirmung (30) aus einem Stück gebildet wird, wobei der Befestigungsschritt umfasst, dass die Wärmeabschirmung erwärmt wird, um deren Ausdehnung zu bewirken; die Wärmeabschirmung um das Batteriegehäuse (12) herum positioniert wird; und die Wärmeabschirmung gekühlt wird, um so deren Kontraktion zu bewirken, so dass die Wärmeabschirmung das Batteriegehäuse umgreift.

9. Verfahren nach Anspruch 7, wobei die Wärmeabschirmung (30) aus einem Stück gebildet wird, wobei die Wärmeabschirmung durch Formen geformt wird, und wobei die geformte Wärmeabschirmung um das Batteriegehäuse (12) herum vor einer Kühlung der geformten Wärmeabschirmung positioniert wird, und die Wärmeabschirmung anschließend gekühlt wird, um deren Kontraktion zu bewirken, so dass die Wärmeabschirmung das Batteriegehäuse umgreift.

10. Verfahren nach Anspruch 7, wobei die Wärmeabschirmung (30) aus zwei Stücken gebildet wird, wobei der Befestigungsschritt umfasst, dass die beiden Stücke der Wärmeabschirmung miteinander verschweißt werden.

## Revendications

1. Batterie pour véhicule comprenant un boîtier de batterie (12) maintenant un fluide de batterie , des plaques négatives et positives et des bornes de batterie (20, 22) positive et négative ; ainsi qu'un bouclier thermique (30) formé en une seule pièce, ou formé à partir de deux pièces assemblées, fixé au boîtier de batterie par ajustement sensiblement serré, de façon que le boîtier de la batterie et le bouclier thermique constituent une structure rigide sensiblement unitaire.

2. Batterie pour véhicule selon la revendication 1, dans laquelle le bouclier thermique (30) est sensiblement rigide.

3. Batterie pour véhicule selon la revendication 1 ou 2, dans laquelle chaque paroi (32) du bouclier thermique (30) a une épaisseur de sensiblement 6 millimètres ou davantage.

4. Batterie pour véhicule selon l'une quelconque des revendications précédentes , dans laquelle le bouclier thermique (30) est constitué en polypropylène.

5. Batterie pour véhicule selon l'une quelconque des revendications précédentes, dans laquelle le boîtier de batterie (12) et le bouclier thermique (30) sont constitués sensiblement du même matériau.

6. Batterie pour véhicule selon l'une quelconque des revendications précédentes, dans laquelle le bouclier thermique (30) est adapté pour envelopper le boîtier de batterie (12) de manière sensiblement complète.

7. Méthode pour former une batterie pour véhicule selon l'une quelconque des revendications précédentes, comprenant l'assemblage d'une batterie avec le boîtier de batterie (12), la formation du bouclier thermique (30) en une seule pièce ou en deux pièces, et la fixation du bouclier thermique au boîtier de batterie avec un ajustement sensiblement serré, de façon que le boîtier de batterie et le bouclier thermique forment une structure rigide sensiblement unitaire.

8. Méthode selon la revendication 7, dans laquelle le bouclier thermique (30) est formé en une seule pièce, dans laquelle l'étape de fixation comporte un chauffage du bouclier thermique pour provoquer sa dilatation, un positionnement du bouclier thermique autour du boîtier de la batterie (12), et un refroidissement du bouclier thermique pour provoquer sa contraction de façon que le bouclier thermique enserre le boîtier de la batterie.

9. Méthode selon la revendication 7, dans laquelle le bouclier thermique (30) est formé d'une seule pièce, dans laquelle le bouclier thermique est formé par moulage, et en ce que le bouclier thermique moulé est positionné autour du boîtier de batterie (12) avant refroidissement du bouclier thermique moulé, et le bouclier thermique est ensuite refroidi pour provoquer sa contraction de telle sorte que le bouclier thermique enserre le boîtier de la batterie.

10. Méthode selon la revendication 7, dans laquelle le bouclier thermique (30) est formé en deux pièces, dans laquelle l'étape de fixation comporte un soudage mutuel des deux pièces du bouclier thermique.
